# EUROPEAN PATENT APPLICATION

(11) **EP 4 307 442 A1**
(43) Date of publication of application: **17.01.2024**
(21) Application number: 22919354.5
(22) Date of filing: 11.01.2022
(51) Int. Cl.: H01M 50/103, H01M 50/15, H01M 50/169, H01M 10/613, H01M 10/6567, H01M 10/6568, H01M 10/654

(54) **CELL, BATTERY, ELECTRIC DEVICE, AND MANUFACTURING METHOD FOR CELL**

(71) Applicant: Contemporary Amperex Technology Co., Limited, Ningde, Fujian 352100 (CN)
(72) Inventor: CHEN, Wei, Ningde, Fujian 352100 (CN); SHI, Dongyang, Ningde, Fujian 352100 (CN); LI, Baiqing, Ningde, Fujian 352100 (CN)
(74) Representative: Rowlands, Stuart Michael
(86) International application number: PCT/CN2022/071369
(87) International publication number: WO 2023/133688

(57) **Abstract**

The present application provides a cell, a battery, an electric device, and a manufacturing method for the cell. The cell comprises an electrode assembly, a housing and two end covers; the housing is provided with two openings provided in a first direction opposite to each other, and the housing comprises a housing wall surroundingly provided in a circumferential direction and a partition portion provided in the housing wall; the partition portion separates, in a second direction, the internal cavity of the housing into a first cavity and a second cavity independent of each other, wherein the second direction is perpendicular to the first direction; the first cavity is used for accommodating the electrode assembly, and the second cavity forms a flow channel for cooling liquid; the two end covers are correspondingly provided at the two openings; the end covers are sealedly connected to the housing wall, and are sealedly connected to an end surface of the partition portion. The cooling efficiency of the cell of the present application is improved.

## Description

### TECHNICAL FIELD

This application relates to the field of battery technology, and in particular, to a battery cell, a battery, an electrical device, and a battery cell manufacturing method.

### BACKGROUND

With the rapid development of power batteries, the energy density of the batteries keeps increasing. The higher energy density increases the heat generated by the power batteries. Therefore, it is important to improve the cooling efficiency of a battery.

### SUMMARY

In view of the foregoing problems, this application provides a battery cell, a battery, an electrical device, and a battery cell manufacturing method to improve the cooling efficiency of the battery.

According to a first aspect, this application provides a battery cell, including an electrode assembly, a housing, and two end caps. The housing includes two openings opposite to each other in a first direction. The housing includes a housing wall closing around and a partitioning portion disposed in the housing wall. The partitioning portion partitions an inner cavity of the housing into a first cavity and a second cavity independent of each other in a second direction. The second direction is perpendicular to the first direction. The first cavity is configured to accommodate the electrode assembly. The second cavity forms a flow channel of a cooling liquid. The two end caps are disposed at the two openings correspondingly. The end caps are hermetically connected to the housing wall, and the end caps are hermetically connected to end faces of the partitioning portion respectively.

In the technical solution of this application, the partitioning portion partitions the inner cavity of the housing into a first cavity and a second cavity independent of each other. The first cavity is configured to accommodate the electrode assembly, and the second cavity is configured to accommodate the cooling liquid. In this way, the heat generated in the first cavity can be transferred, through the partitioning portion alone, to the cooling liquid in the second cavity and taken away by the cooling liquid. The heat transfer path is simple, the heat transfer efficiency is high, and the cooling efficiency of the battery is improved. Moreover, both the first cavity and the second cavity in an embodiment of this application are sealed off by end caps, so that the degree of integration of the battery cell is high, and assembly is simple.

In some embodiments, the end cap is formed as one piece. The end cap is welded to the housing wall. The end cap is hermetically connected to the end face of the partitioning portion by laser penetration welding. The end cap is formed as one piece. Therefore, to connect the end cap to the housing, the end cap may be welded to the housing wall of the housing first, and then the end cap is welded to the end face of the partitioning portion by laser penetration welding, thereby implementing hermetic connection between the end cap and the end face of the partitioning portion. Therefore, the one-piece formation of the end cap simplifies the assembly process.

In some embodiments, the end cap includes a first end cap section configured to seal off the first cavity and a second end cap section configured to seal off the second cavity. The first end cap section is welded to an end face of the first cavity. The second end cap section is welded to an end face of the second cavity. The first end cap section, the second end cap section, and the partitioning portion are connected to each other by a binder. The end cap is split into an upper part and a lower part. After the two parts are welded to an end face of the housing separately, the two parts and the partitioning portion are sealed again, thereby further ensuring reliable sealing between the first cavity and the second cavity.

In some embodiments, the housing wall includes two first sidewalls perpendicular to a third direction and opposite to each other as well as two second sidewalls perpendicular to the second direction and opposite to each other. The third direction, the second direction, and the first direction are perpendicular to each other. An area of the second sidewall is smaller than an area of the first sidewall. The partitioning portion is parallel to the second sidewall. With the partitioning portion being parallel to the second sidewall, the cooling liquid in the second cavity is caused to cover the second sidewall. In this way, when major surfaces of a plurality of battery cells are arranged in parallel, all the second cavities are located at the same end, thereby facilitating unified feeding of the cooling liquid into the second cavities of the plurality of battery cells. Moreover, such arrangement achieves a relatively small area of the partitioning portion between the first cavity and the second cavity, thereby making it easier to implement isolation between the two cavities.

In some embodiments, a thickness of the partitioning portion is greater than a thickness of the housing wall. With the thickness of the partitioning portion being greater than the thickness of the housing wall, the connection area between the partitioning portion and the end cap can be increased to ensure isolation between the first cavity and the second cavity.

In some embodiments, the housing includes two partitioning portions disposed in the housing wall and parallel to each other. The two partitioning portions partition the inner cavity of the housing into a first cavity and two second cavities that are independent of each other, and the two second cavities are arranged on two sides of the first cavity respectively. Such arrangement makes the cooling liquid flow on both sides of the first cavity configured to accommodate the electrode assembly 21, thereby further improving the cooling efficiency.

In some embodiments, the two end caps include a first end cap and a second end cap. A cooling liquid input pipe configured to input the cooling liquid into the second cavity is disposed on the first end cap. A cooling liquid output pipe configured to output the cooling liquid from the second cavity is disposed on the second end cap. The cooling liquid input pipe and the cooling liquid output pipe are disposed on the two end caps respectively to circulate the cooling liquid in the second cavity, thereby improving the cooling effect.

In some embodiments, the cooling liquid input pipe and/or the cooling liquid output pipe are insulating pipes. The cooling liquid input pipe and the cooling liquid output pipe of each battery cell are made of an insulating material to prevent the housings of a plurality of battery cells from being connected by the cooling pipes to form an equipotential body, thereby avoiding the problem of electrolytic corrosion.

In some embodiments, the battery cell further includes two electrode posts disposed on the two end caps respectively. The electrode assembly includes a body portion and two tabs endowed with opposite polarities and protruding out from the body portion. The two tabs protrude out toward the two openings respectively and are electrically connected to corresponding electrode posts. The two electrode posts are disposed at the two ends of the battery cell respectively, thereby facilitating the connection between a plurality of battery cells.

In some embodiments, the battery cell further includes two electrode posts disposed one end cap among the two end caps. The electrode assembly includes a body portion and two tabs endowed with opposite polarities and protruding out from the body portion toward the two electrode posts. The two tabs are electrically connected to the two electrode posts correspondingly. Both electrode posts are disposed at the same end of the battery cell, so that other sides of the battery cells can be arranged in parallel. In addition, the end of the battery cell, which is opposite to the end at which the electrode posts are disposed, can directly form a contact surface in contact with the box, thereby facilitating the arrangement of a plurality of battery cells in the box.

In some embodiments, the housing is formed as one piece. The housing formed as one piece can simplify the manufacturing process of the battery 20.

According to a second aspect, this application provides a battery, including the battery cell.

In some embodiments, the battery includes at least two battery cells disposed in parallel, a cooling liquid input main pipe, and a cooling liquid output main pipe. Two ends of the second cavity of each of the at least two battery cells are in fluid communication with the cooling liquid input main pipe and the cooling liquid output main pipe respectively. The cooling liquid input main pipe and/or the cooling liquid output main pipe are insulating pipes. The cooling liquid input main pipe and the cooling liquid output main pipe are made of an insulating material to prevent the housings of a plurality of batteries from being connected by the cooling pipes to form an equipotential body.

According to a third aspect, this application provides an electrical device. The electrical device includes the battery. The battery is configured to provide electrical energy.

According to a fourth aspect, this application provides a battery cell manufacturing method, including the following steps:
providing an electrode assembly;
providing a housing, where the housing includes two openings opposite to each other in a first direction, the housing includes a housing wall closing around and a partitioning portion disposed in the housing wall; the partitioning portion partitions an inner cavity of the housing into a first cavity and a second cavity independent of each other in a second direction, and the second direction is perpendicular to the first direction; the first cavity is configured to accommodate the electrode assembly; and the second cavity forms a flow channel of a cooling liquid; and
providing two end caps, disposing the two end caps at the two openings correspondingly, hermetically connecting the end caps to the housing wall, and hermetically connecting the end caps to end faces of the partitioning portion respectively.

In the battery cell manufacturing method according to this application, the partitioning portion partitions the inner cavity of the housing into a first cavity and a second cavity independent of each other. The first cavity is configured to accommodate the electrode assembly, and the second cavity is configured to accommodate the cooling liquid. In this way, the heat generated in the first cavity can be transferred, through the partitioning portion alone, to the cooling liquid in the second cavity and taken away by the cooling liquid. The heat transfer path is simple, the heat transfer efficiency is high, and the cooling efficiency of the battery is improved. Moreover, both the first cavity and the second cavity in an embodiment of this application are sealed off by end caps, so that the degree of integration of the battery cell is high, and assembly is simple.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

To describe the technical solutions of the embodiments of this application more clearly, the following outlines the drawings used in the embodiments of this application. As will be apparent, the drawings outlined below are merely a part of embodiments of this application. A person of ordinary skill in the art may derive other drawings from the outlined drawings without making any creative efforts.
FIG. 1 is a schematic structural diagram of a vehicle according to some embodiments of this application;
FIG. 2 is a schematic exploded view of a battery according to some embodiments of this application;
FIG. 3 is a three-dimensional schematic structural diagram of a battery cell according to some embodiments of this application;
FIG. 4 is a schematic exploded view of a battery cell according to some embodiments of this application;
FIG. 5 is a three-dimensional schematic structural diagram of a housing according to some embodiments of this application;
FIG. 6 is a schematic structural side view of a housing according to some embodiments of this application;
FIG. 7 is a schematic exploded view of a battery cell according to some other embodiments of this application;
FIG. 8 is a schematic exploded view of a battery cell according to still some other embodiments of this application;
FIG. 9 is a schematic exploded view of a battery cell according to some embodiments of this application;
FIG. 10 is a schematic structural side view of a battery according to some embodiments of this application; and
FIG. 11 is a flowchart of a battery cell manufacturing method according to some embodiments of this application.

The drawings are not drawn to scale.

### List of reference numerals:

1000. vehicle;
100. battery; 200. controller; 300. motor;
10. box; 11. first part; 12. second part;
20. battery cell; 21. electrode assembly; 211. body portion. 212. tab; 22. housing; 22a. first cavity; 22b. second cavity; 221. housing wall; 2211. first sidewall; 2212. second side wall; 222. partitioning portion; 23. end cap; 231. first end cap section; 232. second end cap section; 24. electrode post; 25. cooling liquid input pipe; 26. cooling liquid output pipe; 27. injection port;
30. cooling liquid input main pipe;
40. cooling liquid output main pipe;
X. first direction; Z. second direction; Y third direction.

### DETAILED DESCRIPTION OF EMBODIMENTS

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, a battery cell generally includes a housing, an end cap, and an electrode assembly accommodated in the housing. The housing is filled with an electrolyte. The electrode assembly is a component that reacts electrochemically in the battery cell. The housing is a component that forms an internal environment of the battery cell. The end cap is a component that fits the opening of the housing to isolate the internal environment of the battery cell from an external environment. An existing battery cell is typically cooled by disposing a cooling plate at the bottom of the battery cell. Specifically, a thermal adhesive is disposed between the cooling plate and the bottom face of the battery cell to increase a contact area between the battery cell and the cooling plate. The heat generated by the battery cell during charging and discharging is transferred from top to bottom to the cooling plate through the thermal adhesive. Subsequently, the heat is taken away by the cooling liquid flowing inside the cooling plate, thereby reducing the battery temperature. The inventor of this application has found through research that, when the above cooling method is applied, the heat generated by the battery needs to pass through the housing, the thermal adhesive, the cooling plate, and the cooling liquid. A thermal resistance on the heat transfer path is high, thereby impairing the heat transfer efficiency. Specifically, a heat transfer coefficient of the thermal adhesive is usually as low as 2 to 3 W/m·K, far lower than 230 W/m K that is the heat transfer coefficient of the metal aluminum (the housing is usually an aluminum shell). Although the thickness of the thermal adhesive is usually as tiny as 1 mm, the heat transfer coefficient of the thermal adhesive is as low as nearly one hundredth of the heat transfer coefficient of the metal aluminum, thereby hindering the heat transfer severely. Consequently, the above cooling method incurs the problem of low heat transfer efficiency, and in turn, reduces the cooling efficiency of the battery. In addition, in the above cooling method, the thicknesses of the liquid cooling plate and the thermal adhesive take up space of the box, and impair the overall energy density of the battery.

In view of the above problems, to improve the cooling efficiency of the battery, the inventor comes up with an idea of disposing a partitioning portion in the housing of the battery. The partitioning portion partitions the inner cavity of the housing into a first chamber and a second cavity independent of each other. The first cavity is configured to accommodate the electrode assembly. The second cavity is configured to form a flow channel of the cooling liquid. Subsequently, the end cap is hermetically connected to the end face of the partitioning portion to isolate the first cavity from the second cavity, thereby preventing the cooling liquid from entering the first cavity. In addition, the end cap is hermetically connected to the housing wall to isolate the inner cavity of the housing from the outside. In this way, the heat generated in the first cavity can be transferred, through the partitioning portion alone, to the cooling liquid in the second cavity and taken away by the cooling liquid. The heat transfer path is simple, the heat transfer efficiency is high, and the cooling efficiency of the battery is improved. Moreover, under low-temperature conditions, when the temperature of the first cavity is lower than the temperature of the second cavity, the cooling liquid of the second cavity can better heat up the electrode assembly and the electrolyte solution.

The battery cell disclosed in embodiments of this application is applicable to, but without being limited to, electrical devices such as a vehicle, watercraft, or aircraft. A power supply system of the electrical devices may contain the battery cell, the battery, and the like disclosed in this application.

An embodiment of this application provides an electrical device powered by a battery. The electrical device may be, but without being limited to, a mobile phone, a tablet, a notebook computer, an electric toy, an electric tool, an electric power cart, an electric vehicle, a ship, a spacecraft, and the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1000 is used as an example of the electrical device according to an embodiment of this application.

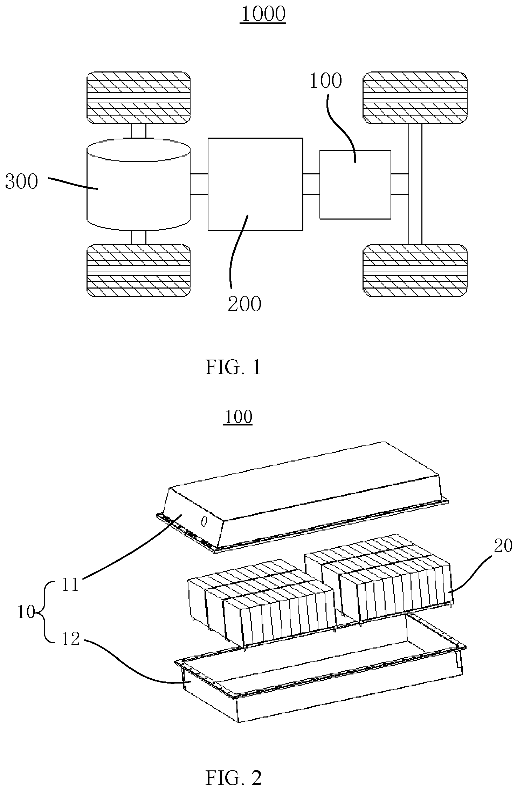

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

Referring to FIG. 2, FIG. 2 is an exploded view of a battery 100 according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 20. The second part 12 may be a hollowed-out structure that is open at one end. The first part 11 may be a plate-like structure. The first part 11 fits the opening of the second part 12 so that the first part 11 and the second part 12 together define the accommodation space. Alternatively, the first part 11 and the second part 12 each may be a hollowed-out structure that is open at one end. The opening of the first part 11 fits and covers the opening of the second part 12. Definitely, the box 10 formed by the first part 11 and the second part 12 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, the plurality of battery cells 20 may be connected in series, parallel, or series-and-parallel pattern to form a battery 100 in the form of battery modules first. A plurality of battery modules are then connected in series, parallel, or series-and-parallel pattern to form a whole for being accommodated in the box 10. The battery 100 may further include other structures. For example, the battery 100 may further include a busbar component. The busbar component is configured to implement electrical connection between the plurality of battery cells 20.

Each battery cell 20 may be, but without being limited to, a secondary battery or primary battery; or may be a lithium-sulfur battery, a sodium-ion battery, or a magnesium-ion battery. The battery cell 20 may be in the shape of a cylinder, flat body, cuboid, or the like.

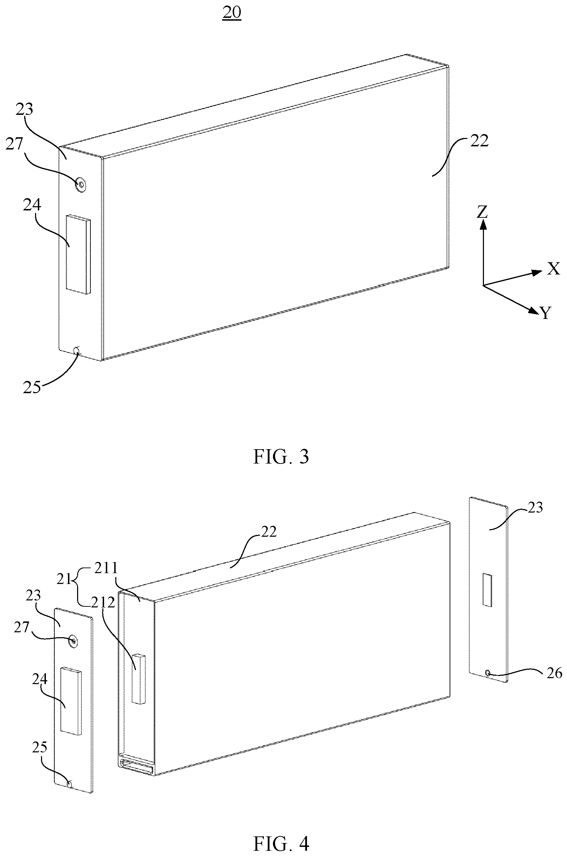

Referring to FIG. 3 and FIG. 4, FIG. 3 is a three-dimensional schematic structural diagram of a battery cell 20 according to some embodiments of this application, and FIG. 4 is a schematic exploded view of a battery cell 20 according to some embodiments of this application. As shown in FIG. 3 and FIG. 4, the battery cell 20 includes an electrode assembly 21, a housing 22, an end cap 23, an electrode post 24, and other functional components.

The electrode assembly 21 is a component that reacts electrochemically in the battery cell 20. The electrode assembly 21 is typically formed of a positive electrode plate and a negative electrode plate that are wound or stacked together. Generally, a separator is disposed between the positive electrode plate and the negative electrode plate. The parts, coated with an active material, of the positive electrode plate and the negative electrode plate, constitute a body portion of the electrode assembly. The part, coated with no active material, of the positive electrode plate and the negative electrode plate separately, constitutes a tab. In a charge-and-discharge process of the battery, the positive active material and the negative active material react with an electrolyte solution. The tab is connected to the electrode post to form a current circuit.

The housing 22 is a component configured to form an internal environment of the battery cell 20. The formed internal environment may be used to accommodate the electrode assembly 21, an electrolyte solution, and other components. The housing 22 may contain one or more electrode assemblies 21. The housing 22 may be made of a variety of materials such as copper, iron, aluminum, stainless steel, aluminum alloy, or plastic, without being particularly limited herein.

The end cap 23 is a component that fits and covers the opening of the housing 22 to isolate the internal environment of the battery cell 20 from the external environment. Without limitation, the shape of the end cap 23 may be adapted to the shape of the housing 22 to fit the housing 22. Optionally, the end cap 23 may be made of a material of appropriate hardness and strength (such as aluminum alloy), so that the end cap 23 is not prone to deform when squeezed or impacted. In this way, the battery cell 20 achieves higher structural strength and higher safety performance. Functional components such as the electrode post 24 may be disposed on the end cap 23. The electrode post 24 is configured to be electrically connected to the electrode assembly 21 to output or input electrical energy of the battery cell 20. In some embodiments, the end cap 23 may be equipped with a pressure relief mechanism configured to release an internal pressure when the internal pressure or temperature of the battery cell 20 reaches a threshold. The end cap 23 may be made of a variety of materials such as copper, iron, aluminum, stainless steel, aluminum alloy, or plastic, without being particularly limited herein. In some embodiments, an insulation piece may be further disposed on an inner side of the end cap 23. The insulation piece may be configured to isolate an electrically connected component in the housing 22 from the end cap 23 to reduce short-circuit risks. For example, the insulator may be plastic, rubber, or the like.

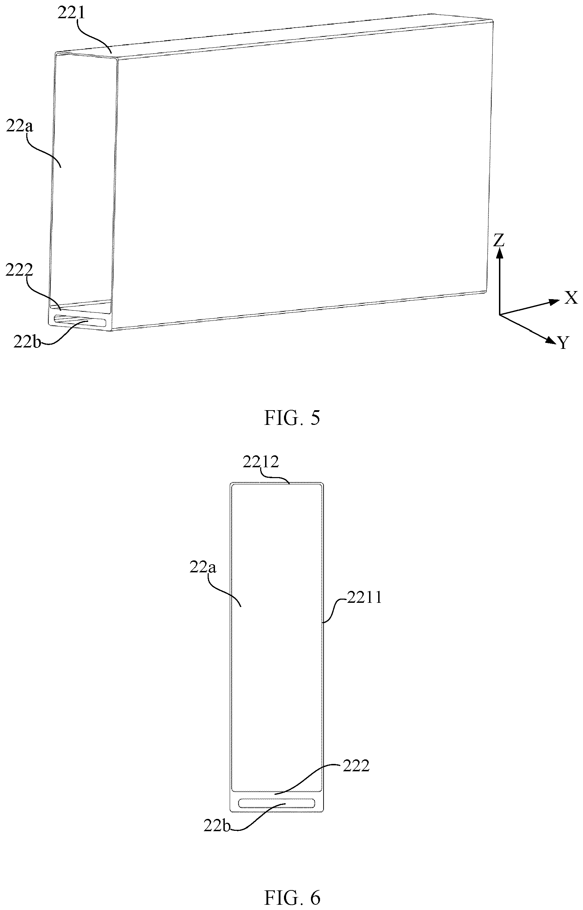

Referring to FIG. 3 to FIG. 6, FIG. 3 is a three-dimensional schematic structural diagram of a battery cell 20 according to some embodiments of this application. FIG. 4 is a schematic exploded view of a battery cell 20 according to some embodiments of this application. FIG. 5 is a three-dimensional schematic structural diagram of a housing 22 according to some embodiments of this application. FIG. 6 is a schematic structural side view of a housing 22 according to some embodiments of this application.

The battery cell 20 according to an embodiment of this application includes an electrode assembly 21, a housing 22, and two end caps 23. Referring to FIG. 4 and FIG. 5, the housing 22 includes two openings opposite to each other in the first direction X. In addition, the housing 22 includes a housing wall 221 closing around and a partitioning portion 222 disposed in the housing wall 221. The partitioning portion 222 partitions the inner cavity of the housing 22 into a first cavity 22a and a second cavity 22b independent of each other in the second direction Z. The second direction Z is perpendicular to the first direction X. The first cavity 22a is configured to accommodate the electrode assembly 21. The second cavity 22b forms a flow channel of the cooling liquid. The two end caps 23 are disposed at the two openings correspondingly. The end caps 23 are hermetically connected to the housing wall 221, and the end caps 23 are hermetically connected to end faces of the partitioning portion 222 respectively.

As shown in FIG. 3, the first direction X is a length direction of the battery cell 20, the second direction Z is a width direction of the battery cell 20, and the third direction Y is a thickness direction of the battery cell 20.

As shown in FIG. 5, the housing 22 includes a housing wall 221 closing around and a partitioning portion 222 disposed in the housing wall 221. The housing wall 221 includes two first sidewalls perpendicular to the third direction Y and opposite to each other as well as two second sidewalls perpendicular to the second direction Z and opposite to each other. The partitioning portion 222 is disposed apart from and parallel to the second sidewall, so as to partition the inner cavity of the housing 22 into a first cavity 22a and a second cavity 22b independent of each other. In other embodiments not shown in the drawings, the partitioning portion may be disposed apart from and parallel to the first sidewall, so as to partition the inner cavity of the housing 22 into a first cavity and a second cavity independent of each other in the third direction Y The third direction Y is perpendicular to the first direction X. As shown in FIG. 5, the partition 222 may be a partition plate. Alternatively, in other embodiments not shown in the drawings, the partitioning portion may be any other structure that can separate the first cavity 22a from the second cavity 22b.

As shown in FIG. 3 and FIG. 4, the end caps 23 are hermetically connected to the housing wall 221, and the end caps 23 are hermetically connected to end faces of the partitioning portion 222 respectively. The end caps 23 are hermetically connected to the end faces of the housing wall 221 so that the end caps 23 seal off the first cavity 22a and the second cavity 22b simultaneously. In addition, the end caps 23 are hermetically connected to the end faces of the partitioning portion 222 to prevent the cooling liquid from entering the first cavity 22a. Specifically, the end caps 23 may be hermetically connected to the end faces of the partitioning portion 222 by laser penetration welding.

In the battery cell 20 according to this embodiment of this application, the partitioning portion 222 partitions the inner cavity of the housing 22 into a first cavity and a second cavity independent of each other. The first cavity is configured to accommodate the electrode assembly, and the second cavity is configured to accommodate the cooling liquid. In this way, the heat generated in the first cavity can be transferred, through the partitioning portion 222 alone, to the cooling liquid in the second cavity and taken away by the cooling liquid. The heat transfer path is simple, the heat transfer efficiency is high, and the cooling efficiency of the battery is improved. Moreover, both the first cavity and the second cavity in this embodiment of this application are sealed off by end caps 23, so that the degree of integration of the battery cell is high, and assembly is simple.

As shown in FIG. 3 and FIG. 4, in some embodiments, the end cap 23 is formed as one piece. The end caps 23 are welded to the housing wall 221. In addition, the end caps 23 are hermetically connected to the end faces of the partitioning portion 222 by laser penetration welding.

Specifically, as shown in FIG. 3 and FIG. 4, each end cap 23 is a rectangular flat plate structure. A peripheral edge of the end cap 23 is welded to the housing wall 221. Subsequently, a position corresponding to the partitioning portion 222 on the end cap 23 is welded to an end face of the partitioning portion 222 by laser penetration welding. To implement the penetration welding between the end cap 23 and the partitioning portion 222 conveniently, the position corresponding to the partitioning portion 222 on the end cap 23 may be thinned. In other words, the end cap 23 includes a body region and a connection region connected to the partitioning portion 222. The thickness of the connection region is less than the thickness of the body region.

The end cap 23 is formed as one piece. Therefore, to connect the end cap 23 to the housing 22, the end cap 23 may be welded to the housing wall 221 of the housing 22 (for example, by laser welding) first, and then the end cap 23 and the end face of the partitioning portion 222 are welded together by laser penetration welding, thereby implementing hermetic connection between the end cap 23 and the end face of the partitioning portion 222. Therefore, the one-piece formation of the end cap 23 simplifies the assembly process.

Specifically, the end faces of the first cavity and the second cavity are on the same plane. Correspondingly, junctions between the end cap 23 and the housing 22 are also on the same plane, thereby further simplifying the assembly process.

In some embodiments, referring to FIG. 5 and FIG. 6, the housing wall 221 includes two first sidewalls perpendicular to the third direction Y and opposite to each other as well as two second sidewalls perpendicular to the second direction Z and opposite to each other. The third direction Y, the second direction Z, and the first direction X are perpendicular to each other. The area of the second sidewall is smaller than the area of the first sidewall, and the partitioning portion 222 is parallel to the second sidewall.

As shown in FIG. 5, the area of the second sidewall of the housing wall 221 is smaller than the area of the first sidewall. In other words, the first sidewall of the housing wall 221 forms a major surface of the battery cell 20. The second sidewall of the housing wall 221 forms a minor surface of the battery cell 20. The partitioning portion 222 is parallel to the minor surface of the battery cell 20.

With the partitioning portion 222 being parallel to the second sidewall, the cooling liquid in the second cavity is caused to cover the second sidewall. In this way, when major surfaces of a plurality of battery cells 20 are arranged in parallel, all the second cavities are located at the same end, thereby facilitating unified feeding of the cooling liquid into the second cavities of the plurality of battery cells 20. Moreover, such arrangement achieves a relatively small area of the partitioning portion between the first cavity and the second cavity, thereby making it easier to implement isolation between the two cavities.

Specifically, in the embodiment shown in FIG. 5, a distance between the partitioning portion 222 and one of the two second sidewalls is greater than a distance between the partitioning portion 222 and the other second sidewall. In this way, the volume of the first cavity is larger than the volume of the second cavity. In other words, although the cooling liquid channel in this embodiment of this application is formed inside the housing 22, the space occupied by the cooling liquid channel is relatively small.

As can be seen from above, the end cap 23 needs to be hermetically connected to the end face of the partitioning portion 222 to prevent the cooling liquid in the second cavity from entering the first cavity. Therefore, to effectively ensure a reliable hermetic connection between the end cap 23 and the end face of the partitioning portion 222, in some embodiments, referring to FIG. 5 and FIG. 6, the thickness of the partitioning portion 222 is greater than the thickness of the housing wall 221.

With the thickness of the partitioning portion 222 being greater than the thickness of the housing wall 221, the connection area between the partitioning portion 222 and the end cap 23 can be increased to ensure isolation between the first cavity and the second cavity.

Specifically, in order to balance the energy density and the mechanical strength of the housing, as shown in FIG. 6, the thickness of the first sidewall 2211 of the housing wall 221 ranges from 0.2 mm to 2.0 mm. Preferably, the thickness range of the first sidewall 2211 is 0.5 mm to 1.0 mm. Among the two second sidewalls 2212, the second sidewall 2212 forming the first cavity (that is, the second sidewall 2212 away from the partitioning portion 222) possesses a thickness ranging from 0.2 mm to 2.0 mm. Preferably, the second sidewall 2212 away from the partitioning portion 222 possesses a thickness ranging from 0.5 mm to 1.0 mm. Among the two second sidewalls 2212, the second sidewall 2212 forming the second cavity (that is, the second sidewall 2212 close to the partitioning portion 222) possesses a thickness ranging from 0.5 mm to 5 mm. Preferably, the second sidewall 2212 close to the partitioning portion 222 possesses a thickness ranging from 1.0 mm to 2.0 mm. The thickness of the partitioning portion 222 ranges from 0.5 mm to 5 mm. Preferably, the thickness of the partitioning portion 222 ranges from 1.0 mm to 3.0 mm.

Referring to FIG. 5 and FIG. 6, in some embodiments, the housing 22 is formed as one piece.

As shown in FIG. 5, specifically, the housing 22 is a rectangular hollowed-out aluminum case, and is integrally formed by an extrusion or stretching process so that the inner cavity of the housing 22 is divided into a large first cavity and a small second cavity. The large first cavity is configured to accommodate the electrode assembly that provides energy for the battery. The small second cavity is a cooling liquid flow channel for cooling or heating the battery. The housing wall 221 and the partitioning portion 222 are made of the same material such as metal, so that the partitioning portion 222 metallically isolates the first cavity from the second cavity and prevents the cooling liquid from entering the first cavity.

As shown in FIG. 5, the length of the housing 22 in the first direction X ranges from 100 mm to 2000 mm, and preferably, ranges from 200 mm to 600 mm. The width of the housing 22 in the second direction Z ranges from 50 mm to 300 mm, and preferably, ranges from 80 mm to 120 mm. The thickness of the housing 22 in the third direction Y ranges from 10 mm to 100 mm, and preferably, ranges from 20 mm to 60 mm.

The housing 22 formed as one piece can simplify the manufacturing process of the battery 20.

Definitely, in other embodiments, the housing wall 221 of the housing 22 may be formed as one piece, and then the partitioning portion 222 is connected in the housing wall 221 by welding or other means.

As shown in FIG. 3 and FIG. 4, the battery cell 20 includes two end caps 23 and two electrode posts 24 disposed on the two end caps 23 respectively. The electrode assembly 21 includes a body portion 211 and two tabs 212 endowed with opposite polarities and protruding out from the body portion 211. The two tabs 212 protrude out toward the two openings respectively and are electrically connected to the corresponding electrode posts 24.

The electrode assembly 21 may be formed by winding or stacking. Two tabs 212 of opposite polarities protrude from two ends of the electrode assembly 21 respectively. Each of the tabs 212 is electrically connected to a corresponding electrode post 24. The tab 212 and the electrode post 24 may be directly connected by welding (such as laser welding). In some other embodiments, for example, both tabs of the electrode assembly are led out from one side of the body portion in the second direction Z. In this case, a tab may be connected to an electrode post by a current collecting plate. For example, one end of the current collecting plate is connected to the tab by ultrasonic welding, and the other end of the current collecting plate is connected to the electrode post by laser welding.

The two electrode posts 24 are disposed at the two ends of the battery cell 20 respectively, thereby facilitating the connection between a plurality of battery cells 20.

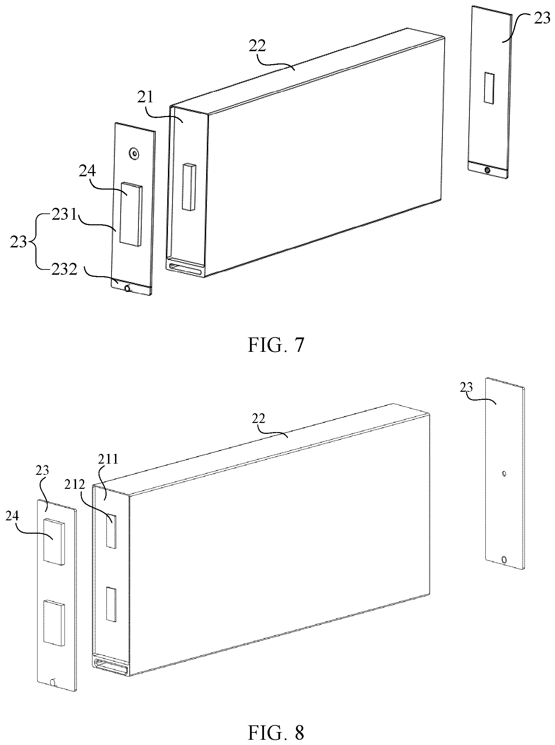

In some other embodiments, as shown in FIG. 8, the battery cell 20 further includes two electrode posts 24 disposed on one end cap 23 among the two end caps 23. The electrode assembly 21 includes a body portion 211 and two tabs 212 endowed with opposite polarities and protruding from the body portion 211 toward the two electrode posts 24. The two tabs 212 are electrically connected to the two electrode posts 24 correspondingly.

Referring to FIG. 8, the two electrode posts 24 are disposed at the same end of the battery cell 20. In this case, the two electrode posts 24 are disposed on one end cap 23 among the two end caps 23, and no electrode post is disposed on the other end cap 23.

Both electrode posts 24 are disposed at the same end of the battery cell 20, so that other sides of the battery cells 20 can be arranged in parallel. In addition, an end of the battery cell 20, which is opposite to the end at which the electrode posts 24 are disposed, can directly form a contact surface in contact with the box 10, thereby facilitating the arrangement of a plurality of battery cells 20 in the box 10.

Referring to FIG. 4, the two end caps 23 include a first end cap and a second end cap. A cooling liquid input pipe 25 configured to input the cooling liquid into the second cavity is disposed on the first end cap. A cooling liquid output pipe 26 configured to output the cooling liquid from the second cavity is disposed on the second end cap.

The cooling liquid input pipe 25 is connected to an external cooling liquid input main pipe, so as to input the cooling liquid into the second cavity. The cooling liquid output pipe 26 is connected to an external cooling liquid output main pipe, so as to output the cooling liquid of the second cavity to the outside. The cooling liquid input pipe 25 may be formed as one piece on the first end cap, and the cooling liquid output pipe 26 may be formed as one piece on the second end cap.

The cooling liquid input pipe 25 and the cooling liquid output pipe 26 are disposed on the two end caps 23 respectively to circulate the cooling liquid in the second cavity, thereby improving the cooling effect.

Specifically, as shown in FIG. 4, an injection port 27 is further created in the first end cap, and is configured to inject an electrolyte solution into the first cavity.

When a plurality of battery cells 20 are disposed in parallel, if the cooling liquid input pipe 25 or the cooling liquid output pipe 26 is a metal pipe, then the housings of the plurality of battery cells 20 are connected by the cooling liquid input pipe 25 or the cooling liquid output pipe 26 to form an equipotential body, giving rise to the problem of electrolytic corrosion. In view of the above problem, the cooling liquid input pipe 25 and the cooling liquid output pipe 26 are made of insulating pipes.

The cooling liquid input pipe 25 and the cooling liquid output pipe 26 of each battery cell 20 are made of an insulating material to prevent the housings of a plurality of battery cells from being connected by the cooling pipes to form an equipotential body, thereby avoiding the problem of electrolytic corrosion.

In some embodiments, in order to ensure the sealing reliability between the first cavity 22a and the second cavity 22b, the end cap 23 is split into an upper part and a lower part. The two parts are welded to an end portion of the housing 22 separately. Referring to FIG. 7, the end cap 23 includes a first end cap section 231 configured to seal off the first cavity 22a and a second end cap section 232 configured to seal off the second cavity 22b. The first end cap section 231 is welded to the end face of the first cavity 22a. The second end cap section 232 is welded to the end face of the second cavity 22b. The first end cap section 231, the second end cap section 232, and the partitioning portion 222 are connected to each other by a binder.

As shown in FIG. 7, the end cap 23 includes a first end cap section 231 and a second end cap section 232 disposed discretely. During assembling of the battery cell 20, the first end cap section 231 is welded to the end face of the first cavity 22a of the housing 22 first. To be specific, the first end cap section 231 is welded to the upper part of the end face of the housing wall 221 and the end face of the partitioning portion 222. Subsequently, the second end cap section 232 is welded to the end face of the second cavity 22b of the housing 22. To be specific, the second end cap section 232 is welded to the lower part of the end face of the housing wall 221 and the end face of the partitioning portion 222. Finally, after completion of the above two welding steps, the lower surface of the first end cap section 231 and the upper surface of the second end cap section 232 are hermetically sealed from the end face of the partitioning portion 222 by a binder (for example, by dispensing a glue).

The end cap 23 is split into an upper part and a lower part. After the two parts are welded to an end face of the housing 22 separately, the two parts and the partitioning portion are sealed again, thereby further ensuring the sealing reliability between the first cavity 22a and the second cavity 22b.

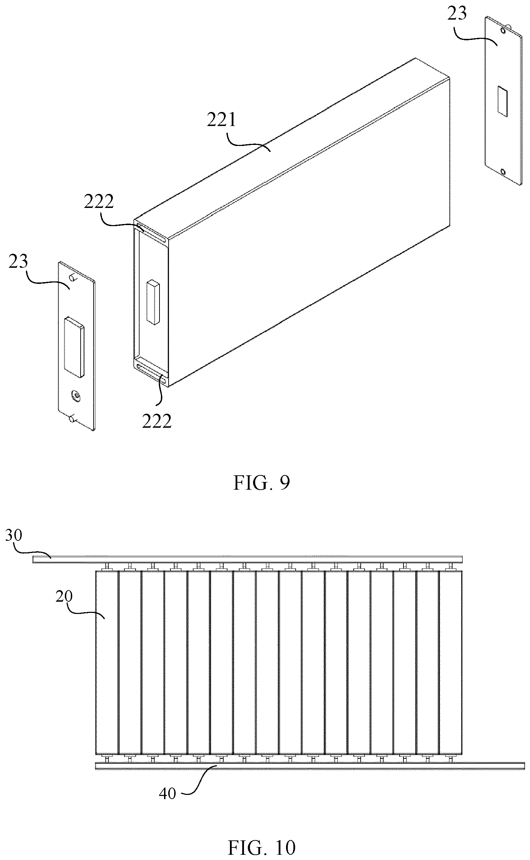

In some embodiments, as shown in FIG. 9, the housing 22 includes two partitioning portions 222 disposed in the housing wall 221 and parallel to each other. The two partitioning portions 222 partition the inner cavity of the housing 22 into a first cavity and two second cavities that are independent of each other, and the two second cavities are arranged on two sides of the first cavity respectively.

Such arrangement makes the cooling liquid flow on both sides of the first cavity configured to accommodate the electrode assembly 21, thereby further improving the cooling efficiency.

An embodiment of this application further provides a battery, including the battery cell 20.

In some embodiments, referring to FIG. 10, the battery includes at least two battery cells 20 disposed in parallel, a cooling liquid input main pipe 30, and a cooling liquid output main pipe 40. Two ends of the second cavity of each of the at least two battery cells 20 are in fluid communication with the cooling liquid input main pipe 30 and the cooling liquid output main pipe 40 respectively. The cooling liquid input main pipe 30 and/or the cooling liquid output main pipe 40 are insulating pipes.

A plurality of battery cells 20 are arranged in parallel, and the second cavity of each battery cell 20 is connected, through a transfer pipe or directly, to the cooling liquid input main pipe 30 and the cooling liquid output main pipe 40. The cooling liquid flows into the bottom of each battery cell 20 from an inlet of the cooling liquid input main pipe 30, cools the battery cell 20, and then flows out from the other end, and flows out from the cooling liquid output main pipe 40 at the other end after confluence. Considering that if a plurality of battery housings are connected by a metal pipe and thereby give rise to an electrolytic corrosion problem, the cooling liquid input main pipe 30 and the cooling liquid output main pipe 40 need to be made of an insulating material to prevent the housings of a plurality of batteries from being connected by the cooling pipes to form an equipotential body.

An embodiment of this application further provides an electrical device. The electrical device includes the battery, and the battery is configured to provide electrical energy.

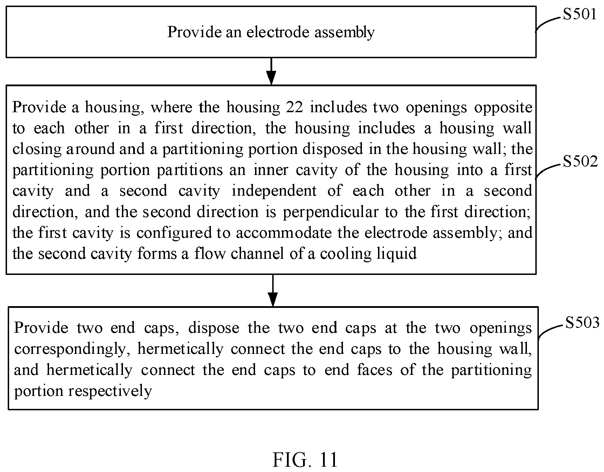

Referring to FIG. 11, a battery cell manufacturing method according to an embodiment of this application includes the following steps:
S501: Providing an electrode assembly 21;
S502: Providing a housing 22, where the housing 22 includes two openings opposite to each other in a first direction X, the housing 22 includes a housing wall 221 closing around and a partitioning portion 222 disposed in the housing wall 221; the partitioning portion 222 partitions an inner cavity of the housing 22 into a first cavity 22a and a second cavity 22b independent of each other in a second direction Z, and the second direction Z is perpendicular to the first direction X; the first cavity 22a is configured to accommodate the electrode assembly 21; and the second cavity 22b forms a flow channel of a cooling liquid; and
S503: Providing two end caps 23, disposing the two end caps 23 at the two openings correspondingly, hermetically connecting the end caps 23 to the housing wall 221, and hermetically connecting the end caps 23 to end faces of the partitioning portion 222 respectively.

In the battery cell manufacturing method according to this embodiment of this application, the partitioning portion 222 partitions the inner cavity of the housing 22 into a first cavity and a second cavity independent of each other. The first cavity is configured to accommodate the electrode assembly, and the second cavity is configured to accommodate the cooling liquid. In this way, the heat generated in the first cavity can be transferred, through the partitioning portion 222 alone, to the cooling liquid in the second cavity and taken away by the cooling liquid. The heat transfer path is simple, the heat transfer efficiency is high, and the cooling efficiency of the battery is improved. Moreover, both the first cavity and the second cavity in this embodiment of this application are sealed off by end caps 23, so that the degree of integration of the battery cell is high, and assembly is simple.

Although this application has been described with reference to illustrative embodiments, various improvements may be made to the embodiments without departing from the scope of this application, and the components in this application may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, comprising:
an electrode assembly (21);
a housing (22), comprising two openings opposite to each other in a first direction (X), wherein the housing (22) comprises a housing wall (221) closing around and a partitioning portion (222) disposed in the housing wall (221); the partitioning portion (222) partitions an inner cavity of the housing (22) into a first cavity (22a) and a second cavity (22b) independent of each other in a second direction (Z), and the second direction (Z) is perpendicular to the first direction (X); the first cavity (22a) is configured to accommodate the electrode assembly (21); and the second cavity (22b) forms a flow channel of a cooling liquid; and
two end caps (23), disposed at the two openings correspondingly, wherein the end caps (23) are hermetically connected to the housing wall (221), and the end caps (23) are hermetically connected to end faces of the partitioning portion (222) respectively.

2. The battery cell according to claim 1, wherein the end cap (23) is formed as one piece, the end cap (23) is welded to the housing wall (221), and the end cap (23) is hermetically connected to the end face of the partitioning portion (222) by laser penetration welding.

3. The battery cell according to claim 1, wherein the end cap (23) comprises a first end cap section (231) configured to seal off the first cavity (22a) and a second end cap section (232) configured to seal off the second cavity (22b); the first end cap section (231) is welded to an end face of the first cavity (22a); the second end cap section (232) is welded to an end face of the second cavity (22b); and the first end cap section (231), the second end cap section (232), and the partitioning portion (222) are connected to each other by a binder.

4. The battery cell according to any one of claims 1 to 3, wherein the housing wall (221) comprises two first sidewalls perpendicular to a third direction (Y) and opposite to each other as well as two second sidewalls perpendicular to the second direction (Z) and opposite to each other; the third direction (Y), the second direction (Z), and the first direction (X) are perpendicular to each other; an area of the second sidewall is smaller than an area of the first sidewall; and the partitioning portion (222) is parallel to the second sidewall.

5. The battery cell according to any one of claims 1 to 4, wherein a thickness of the partitioning portion (222) is greater than a thickness of the housing wall (221).

6. The battery cell according to any one of claims 1 to 5, wherein the housing (22) comprises two partitioning portions (222) disposed in the housing wall (221) and parallel to each other, the two partitioning portions (222) partition the inner cavity of the housing (22) into a first cavity and two second cavities that are independent of each other, and the two second cavities are arranged on two sides of the first cavity respectively.

7. The battery cell according to any one of claims 1 to 6, wherein the two end caps (23) comprise a first end cap and a second end cap, a cooling liquid input pipe (25) configured to input the cooling liquid into the second cavity is disposed on the first end cap, and a cooling liquid output pipe (26) configured to output the cooling liquid from the second cavity is disposed on the second end cap.

8. The battery cell according to claim 7, wherein the cooling liquid input pipe (25) and/or the cooling liquid output pipe (26) are insulating pipes.

9. The battery cell according to any one of claims 1 to 8, wherein the battery cell further comprises two electrode posts (24) disposed on the two end caps (23) respectively, the electrode assembly (21) comprises a body portion (211) and two tabs (212) endowed with opposite polarities and protruding out from the body portion (211), and the two tabs (212) protrude out toward the two openings respectively and are electrically connected to corresponding electrode posts (24).

10. The battery cell according to any one of claims 1 to 8, wherein the battery cell further comprises two electrode posts disposed one end cap (23) among the two end caps (23); the electrode assembly (21) comprises a body portion (211) and two tabs (212) endowed with opposite polarities and protruding out from the body portion (211) toward the two electrode posts; and the two tabs (212) are electrically connected to the two electrode posts (24) correspondingly.

11. The battery cell according to any one of claims 1 to 10, wherein the housing (22) is formed as one piece.

12. A battery, comprising the battery cell (20) according to any one of claims 1 to 11.

13. The battery according to claim 12, comprising at least two battery cells (20) disposed in parallel, a cooling liquid input main pipe (30), and a cooling liquid output main pipe (40); two ends of the second cavity of each of the at least two battery cells are in fluid communication with the cooling liquid input main pipe (30) and the cooling liquid output main pipe (40) respectively; and the cooling liquid input main pipe (30) and/or the cooling liquid output main pipe (40) are insulating pipes.

14. An electrical device, comprising the battery according to claim 12 or 13, wherein the battery is configured to provide electrical energy.

15. A battery cell manufacturing method, comprising the following steps:
providing an electrode assembly (21);
providing a housing (22), wherein the housing (22) comprises two openings opposite to each other in a first direction (X), the housing (22) comprises a housing wall (221) closing around and a partitioning portion (222) disposed in the housing wall (221); the partitioning portion (222) partitions an inner cavity of the housing (22) into a first cavity (22a) and a second cavity (22b) independent of each other in a second direction (Z), and the second direction (Z) is perpendicular to the first direction (X); the first cavity (22a) is configured to accommodate the electrode assembly (21); and the second cavity (22b) forms a flow channel of a cooling liquid; and
providing two end caps (23), disposing the two end caps (23) at the two openings correspondingly, hermetically connecting the end caps (23) to the housing wall (221), and hermetically connecting the end caps (23) to end faces of the partitioning portion (222) respectively.
